# EUROPÄISCHE PATENTSCHRIFT

(11) **EP 2 069 726 B1**
(45) Veröffentlichungstag und Bekanntmachung des Hinweises auf die Patenterteilung: **11.07.2018**
(21) Anmeldenummer: 07803415.4
(22) Anmeldetag: 12.09.2007
(51) Int. Cl.: G01F 1/684

(54) **STECKFÜHLER MIT OPTIMIERTEM STRÖMUNGSAUSLASS**
PLUG-IN SENSOR HAVING AN OPTIMIZED FLOW OUTLET
CAPTEUR ENFICHABLE AVEC SORTIE D'ECOULEMENT OPTIMISEE

(30) Priorität: 27.09.2006 DE 102006045657
(43) Veröffentlichungstag der Anmeldung: 17.06.2009
(73) Patentinhaber: Robert Bosch GmbH, 70442 Stuttgart (DE)
(72) Erfinder: KONZELMANN, Uwe, 71679 Asperg (DE); GMELIN, Christoph, 70597 Stuttgart (DE)
(86) Internationale Anmeldenummer: PCT/EP2007/059551
(87) Internationale Veröffentlichungsnummer: WO 2008/037586

(56) Entgegenhaltungen:
- EP-A- 0 940 657
- EP-B1- 2 069 725
- DE-A1- 4 407 209
- DE-A1- 10 154 561
- DE-A1- 10 348 400
- DE-A1- 19 547 915
- DE-A1- 19 815 656
- GB-A- 2 393 254
- JP-A- H 085 429
- US-A- 4 981 035

## Beschreibung

### Stand der Technik

Die Erfindung geht aus von Vorrichtungen zur Messung wenigstens eines Parameters eines strömenden fluiden Mediums, insbesondere eines durch ein Strömungsrohr strömenden fluiden Mediums, wie sie aus verschiedenen Bereichen der Technik bekannt sind. So müssen bei vielen Prozessen, beispielsweise auf dem Gebiet der Verfahrenstechnik, der Chemie oder des Maschinenbaus, definiert fluide Medien, insbesondere Gasmassen (z. B. eine Luftmasse) mit bestimmten Eigenschaften (beispielsweise Temperatur, Druck, Strömungsgeschwindigkeit, Massenstrom etc.) zugeführt werden. Hierzu zählen insbesondere Verbrennungsprozesse, welche unter geregelten Bedingungen ablaufen.

Ein wichtiges Anwendungsbeispiel ist die Verbrennung von Kraftstoff in Verbrennungskraftmaschinen von Kraftfahrzeugen, insbesondere mit anschließender katalytischer Abgasreinigung, bei denen geregelt eine bestimmte Luftmasse pro Zeiteinheit (Luftmassenstrom) zugeführt werden muss. Zur Messung des Luftmassendurchsatzes werden dabei verschiedene Typen von Sensoren eingesetzt. Ein aus dem Stand der Technik bekannter Sensortyp ist der so genannte Heißfilmluftmassenmesser (HFM), welcher beispielsweise in DE 196 01 791 A1 in einer Ausführungsform beschrieben ist. Bei derartigen Heißfilmluftmassenmessern wird üblicherweise ein Sensorchip eingesetzt, welcher eine dünne Sensormembran aufweist, beispielsweise ein Silicium-Sensorchip. Auf der Sensormembran ist typischerweise mindestens ein Heizwiderstand angeordnet, welcher von zwei oder mehr Temperaturmesswiderständen (Temperaturfühlern) umgeben ist. In einem Luftstrom, welcher über die Membran geführt wird, ändert sich die Temperaturverteilung, was wiederum von den Temperaturmesswiderständen erfasst werden kann und mittels einer Ansteuer- und Auswertungsschaltung ausgewertet werden kann. So kann, zum Beispiel aus einer Widerstandsdifferenz der Temperaturmesswiderstände, ein Luftmassenstrom bestimmt werden. Verschiedene andere Varianten dieses Sensortyps sind aus dem Stand der Technik bekannt.

Eine beispielsweise aus DE 101 11 840 C2 bekannte Problematik dieses Typs von Sensor besteht darin, dass häufig Kontaminationen des Sensorelementes auftreten können, beispielsweise Kontaminationen durch Wasser, Öl oder andere Flüssigkeiten bzw. andere Arten von Verunreinigungen. Der Sensorchip wird üblicherweise direkt im Ansaugtrakt der Verbrennungskraftmaschine oder in einem Bypass zum Ansaugtrakt der Verbrennungskraftmaschine eingesetzt. Dabei kann sich im Betrieb der Verbrennungskraftmaschine Wasser oder Öl auf dem Sensorchip und dabei insbesondere auf der Sensormembran niederschlagen. Dieser Verunreinigungsniederschlag kann zu einer unerwünschten Messsignalbeeinflussung des Sensors führen, insbesondere da ein Flüssigkeitsfilm auf der Oberfläche des Sensors auf die Wärmeleitfähigkeit der Oberfläche einwirkt, was zur Verfälschung der Messsignale führt. Ähnliche Probleme treten neben Heißfilmluftmassenmessern auch bei anderen Arten von Sensoren auf, welche zur Messung von Fluidparametern in einer Fluidströmung eingesetzt werden.

Zur Lösung dieser Verunreinigungsproblematik, insbesondere um zu verhindern, dass Wasser oder Öl auf den Sensorchip gelangen, sind aus dem Stand der Technik verschiedene Ansätze bekannt. Ein Ansatz, welcher beispielsweise in DE 101 35 142 A1 oder DE 10 2004 022 271 A1 beschreiben wird, ist die Verwendung eines so genannten "Bypass". Hierbei wird ein Steckfühler verwendet, welcher mit einem Steckerteil in ein Ansaugrohr eingesteckt wird, wobei anströmseitig in den Steckerteil eine Einlassöffnung vorgesehen ist. Im Steckfühler ist ein Hauptströmungskanal vorgesehen, durch welchen ein wesentlicher Teil der Strömung von der Einlassöffnung zu einer Ausscheidungsöffnung strömt. Vom Hauptkanal zweigt an einer Abzweigung, welche in DE 10 2004 022 271 A1 zusätzlich als scharfen Kante ausgebildet ist (auch als ..Nase" bezeichnet), ein Bypasskanal ab, in welchem ein Sensorchip angeordnet ist. Der Bypasskanal mündest schließlich in eine Auslassöffnung an der Unterseite des Steckfühlers. Die scharfe Kante an der Abzweigung des Bypasskanals bewirkt dabei, dass Wassertröpfchen aufgrund Ihrer Massenträgheit nur erschwert in den Bypasskanal eindringen können und überwiegend im Hauptkanal verbleiben.

Nachteilig an den aus dem Stand der Technik beschriebenen Steckfühlerkonstruktionen ist jedoch, dass die beschriebenen Steckfühler mit ihrer aerodynamisch ungünstigen Gestalt in vielen Fällen im Ansaugtrakt Probleme bezüglich eines Strömungswiderstand-bedingten Druckabfalls verursachen. Hinzu kommt, dass die Signalreproduzierbarkeit der Signale derartiger Sensoren vergleichsweise gering ist. DE 10 2004 022 271 A1 schlägt daher eine Konstruktion vor, bei welcher im Strömungsrohr fest installiert ein Strömungsableitteil als separates Bauteil vorgesehen ist. Alternativ wird auch eine einstückige Ausgestaltung des Strömungsableitteils mit dem Steckfühler vorgeschlagen. Weiterhin ist im Strömungsrohr eine Strömungsleitwand fest installiert, welche eine Beruhigung der Strömung hinter dem Steckfühler bewirken soll. Die aus DE 10 2004 022 271 A1 bekannte Konstruktion ist jedoch in der Praxis mit verschiedenen Nachteilen verbunden. So besteht ein Nachteil darin, dass das Strömungsableitteil in der Regel fest in einem Abschnitt des Strömungsrohrs installiert ist. Diese feste Installation verursacht zusätzliche Kosten bei der Herstellung dieses Rohrabschnitts, ebenso wie das Vorsehen der zusätzlichen Strömungsleitwand. Bei einstückiger Ausführung ist die Einbaulänge zudem für viele Anwendungen zu lang. Außerdem ist die in DE 10 2004 022 271 A1 offenbarte Konstruktion weiter hinsichtlich des Druckabfalls am Steckfühler optimierbar.

Eine weitere Problematik besteht darin, dass die aus DE 101 35 142 A1 oder DE 10 2004 022 271 A1 bekannte Konstruktion nur einen vergleichsweise geringen Luftmassendurchsatz durch den Bypasskanal aufweist, so dass insgesamt die Signalhübe (und damit das Signal-zu-Rausch-Verhältnis) oft vergleichsweise unbefriedigend sind. Zudem wird in DE 101 35 142 A1 und DE 10 2004 022 271 A1 eine Konstruktion eingesetzt, bei welcher die Ausscheidungsöffnung des Hauptströmungskanals seitlich am Steckfühler derart angeordnet ist, dass ausströmende Luft den Strömungsverlauf um den Steckfühler herum negativ beeinflusst und somit den Strömungswiderstand des Steckfühlers zusätzlich erhöht oder sogar die Signalcharakteristik des Steckfühlers beeinflussen kann.

Aus der EP 0 940 657 A2 ist ein Steckfühler zur Bestimmung wenigstens eines Parameters eines in einer Hauptströmungsrichtung durch ein Strömungsrohr strömenden fluiden Mediums bekannt, der ein Steckerteil aufweist, das in das Strömungsrohr in einer Einsteckrichtung mit vorgegebener Ausrichtung zur Hauptströmungsrichtung einsteckbar ist.

Aus der DE 198 15 656 A1 ist ein Steckfühler zur Bestimmung wenigstens eines Parameters eines in einer Hauptströmungsrichtung durch ein Strömungsrohr strömenden fluiden Mediums bekannt, der ein Steckerteil aufweist, das in das Strömungsrohr in einer Einsteckrichtung mit vorgegebener Ausrichtung zur Hauptströmungsrichtung einsteckbar ist. Der Steckfühler weist eine Auslassöffnung auf der Unterseite im Bereich eines Druckminimums hinter einer Abrisskante auf.

### Offenbarung der Erfindung

Es wird daher ein Steckfühler zur Bestimmung wenigstens eines Parameters eines mit einer Hauptströmungsrichtung strömenden fluiden Mediums vorgeschlagen. welcher die oben skizzierten Nachteile der aus dem Stand der Technik bekannten Steckfühler vermeidet. Insbesondere kann es sich bei dem Steckfühler um einen der oben beschriebenen Heißfilmluftmassenmesser handeln, welche zur Messung einer durch ein Strömungsrohr strömenden Ansaugluftmasse einer Brennkraftmaschine geeignet sind. Alternativ oder zusätzlich kommen jedoch auch andere Arten von Messprinzipien und Steckfühlern zum Einsatz.
Ein Grundgedanke der vorliegenden Erfindung besteht darin, mindestens eine Auslassöffnung des mindestens einen Steckfühlers in ihrer Anordnung und Ausgestaltung strömungstechnisch zu optimieren. Zu diesem Zweck wurden verschiedene Simulationsrechnungen durchgeführt, welche das Strömungsverhalten im Bereich der mindestens einen Auslassöffnung beurteilen, wobei verschiedene Gestaltungen und Anordnungen dieser mindestens einen Auslassöffnung untersucht wurden.
Dementsprechend wird ein Steckfühler vorgeschlagen, welcher ein in das strömende fluide Medium in vorgegebener Ausrichtung zur Hauptströmungsrichtung einbringbares Steckerteil aufweist. In dem Steckerteil ist mindestens ein Strömungskanal mit mindestens einer Einlassöffnung und mindestens einer Auslassöffnung vorgesehen, wobei in der mindestens einen Strömungskanal weiterhin mindestens ein Sensor (beispielsweise einer der oben beschriebenen Heißfilmluftmassenmesser/Sensorchips) zur Bestimmung des mindestens einen Parameters aufgenommen ist. Das Steckerteil weist ein Profil (Querschnittsprofil) auf, an welchem sich im strömenden fluiden Medium zumindest ein mindestens lokales Druckminimum einstellt. Die mindestens eine Auslassöffnung (das heißt mindestens eine der mindestens einen Auslassöffnung) ist auf der Seite des Steckerteils im Bereich dieses mindestens einen Druckminimums angeordnet.
Für die Ausgestaltung des Profils des Steckerteils kann beispielsweise auf bekannte Techniken aus der Flugzeugkonstruktion zurückgegriffen werden. Erfindungsgemäß wird ein Tragflächenprofil eingesetzt, welches derart ausgestaltet ist, dass sich bei in das strömende fluide Medium eingebrachtem Steckerteil ein asymmetrisches Strömungsprofil des fluiden Mediums mit einer Hochdruckseite und einer Niederdruckseite einstellt. Derartige Tragflächenprofile sind dem Fachmann aus dem Flugzeugbau bekannt. Derartige Tragflächenprofile sind derart ausgestaltet, dass diese eine Kraft von der Hochdruckseite hin zur Niederdruckseite (Auftriebskraft) bewirken, wobei im Bereich der Niederdruckseite ein Druckminimum auftritt. Die mindestens eine Auslassöffnung ist auf der Niederdruckseite im Bereich des mindestens einen Druckminimums angeordnet.
Zur Erreichung des asymmetrischen Strömungsprofils lassen sich beispielsweise Tragflächenprofile verwenden, welche unter einem Anstellwinkel α zur Hauptströmungsrichtung des strömenden Mediums in das strömende fluide Medium eingebracht werden. Insbesondere haben sich Anstellwinkel zwischen 0° und 7°, vorzugsweise zwischen 2° und 5° und besonders bevorzugt bei 4° bewährt, wobei der optimale Anstellwinkel von der exakten Ausgestaltung des Tragflächenprofils abhängt. Alternativ oder zusätzlich können auch Tragflächenprofile mit einer Profilwölbung verwendet werden, wobei sich Profilwölbungen zwischen 0 % und 10 %, vorzugsweise zwischen 2 % und 7 %, und besonders bevorzugt bei 5 % bewährt haben.

Der erfindungsgemäße Gedanke, die mindestens eine Auslassöffnung im Bereich des mindestens einen Druckminimums anzuordnen, bewirkt einen besonders hohen Durchsatz durch den mindestens einen Strömungskanal, da die Saugwirkung bei Anordnung der mindestens einen Auslassöffnung im Bereich des mindestens einen Druckminimums besonders groß ist. Insbesondere hat es sich dabei bewährt, das Zentrum der mindestens einen Auslassöffnung (zum Beispiel den Flächenmittelpunkt, Kreismittelpunkt oder ähnliches) um nicht mehr als zwei Öffnungsweiten der mindestens einen Auslassöffnung, vorzugsweise um nicht mehr als eine Öffnungsweite, von dem Punkt des mindestens einen Druckminimums entfernt anzuordnen. Die Öffnungsweite (D) ist dabei beispielsweise bei einer kreisförmigen Auslassöffnung der Durchmesser. Bei anderen Ausgestaltungen der Auslassöffnung (beispielsweise quadratischen Auslassöffnungen, vieleckigen Auslassöffnungen etc.) lassen sich auf ähnliche Weise Öffnungsweiten definieren, beispielsweise in Form von Kantenlängen oder ähnlichem.

Insbesondere kann, wie auch im oben beschriebenen Stand der Technik, der mindestens eine Strömungskanal mindestens einen Hauptkanal und mindestens einen Bypasskanal aufweisen, beispielsweise um den Sensor im vor Partikeln und ähnlichen Verschmutzungen geschützten Bypasskanal anzuordnen. So kann die mindestens eine Auslassöffnung mindestens einen Hauptstromauslass des mindestens einen Hauptkanals und/oder mindestens einen Bypassauslass des mindestens einen Bypasskanals umfassen. Dabei hat sich eine Anordnung der mindestens einen Auslassöffnung seitlich auf dem mindestens einen Tragflächenprofil bewährt, welche eine oder beide der folgenden Anordnungen verwirklicht. So kann insbesondere das Zentrum des mindestens einen Bypassauslasses auf oder vor dem mindestens einen Druckminimum angeordnet sein. Insbesondere hat es sich als vorteilhaft erwiesen, wenn das Zentrum des mindestens einen Bypassauslasses in einem Abstand zwischen -0,5 D₁ und 2,0 D₁, vorzugsweise zwischen 0 D₁ und 1,0 D₁ und besonders bevorzugt bei 0,5 D₁ stromaufwärts (das heißt entgegen der Hauptströmungsrichtung) des mindestens einen Druckminimums angeordnet ist. Dabei bezeichnet D₁ die Öffnungsweite des mindestens einen Bypassauslasses, gemäß der obigen Definition des Begriffs "Öffnungsweite". Auf diese Weise kann das Druckminimum und die damit verbundene Saugwirkung optimal ausgenutzt werden, um den Durchsatz durch den mindestens einen Bypasskanal zu erhöhen, welcher maßgeblich ist für die Signalcharakteristik (beispielsweise den Signalhub und/oder das Signal-zu-Rausch-Verhältnis).

Als zweite, alternativ oder zusätzlich einsetzbare Ausgestaltung, kann auch das Zentrum des mindestens einen Hauptstromauslasses in seiner Lage optimal gewählt werden. So kann der mindestens eine Hauptstromauslass auf- oder stromabwärts des mindestens einen Druckminimums gewählt werden. Insbesondere hat es sich dabei bewährt, wenn das Zentrum des mindestens einen Hauptstromauslasses zwischen 0 D₂ und 2,0 D₂, vorzugsweise zwischen 0,5 D₂ und 1,5 D₂ und besonders bevorzugt bei 1,0 D₂ stromabwärts des mindestens einen Druckminimums angeordnet ist. Dabei bezeichnet D₂ die Öffnungsweite des mindestens einen Hauptstromauslasses gemäß der obigen Definition. Die Durchmesser D, D₁ und D₂ liegen vorzugsweise im Bereich zwischen 10% und 20% der Profillänge L'.

Diese besondere Anordnung des mindestens einen Hauptstromauslasses kann beispielsweise auch beinhalten, dass der mindestens eine Hauptstromauslass in einem Ablösebereich der Strömung des fluiden Mediums, das heißt stromabwärts von einem oder mehreren Ablösepunkten der Strömung von Tragflächenprofil, angeordnet ist. Auf diese Weise kann erreicht werden, dass der Hauptstrom, welcher durch den Hauptkanal strömt an seinem Ausstrom aus dem Hauptstromauslass das Strömungsverhalten um den Steckfühler herum möglichst wenig beeinflusst.

Zur Erzeugung des Druckminimums und/oder zur Erzeugung von räumlich fixierten Ablösepunkten kann das Steckerteil weiterhin auf mindestens einer Seite, vorzugsweise nur auf der Niederdruckseite, mindestens ein Ablöseelement aufweisen, welches ausgestaltet ist, um bei in das strömende fluide Medium eingebrachtem Steckerteil das zumindest lokale Druckminimum im strömenden fluiden Medium zu bewirken. Das mindestens eine Ablöseelement kann vorzugsweise einen Knick in der Kontur des Steckerteils oder eine Stufe aufweisen. Auch ein kontinuierlicher Profilverlauf ist möglich, beispielsweise ein Maximum in der Kontur des Steckerteils und/oder ein Wendepunkt in der Kontur. Ausführungsbeispiele derartiger Ablöseelemente werden untenstehend näher beschrieben.

Der Steckfühler mit den oben beschriebenen, einzeln oder in Kombination verwirklichten Merkmalen, weist zum einen gute Abweicheigenschaften gegenüber Wasser, Staub und ähnlichen Verunreinigungen auf. Dies ist insbesondere bei Verwendung des mindestens einen Bypasskanals, welcher vom mindestens einen Hauptkanal abzweigt, der Fall. Weiterhin kann der beschriebene Steckfühler kompakt ausgestaltet werden, um auch bei engem Bauraum eingesetzt zu werden. Die Gesamtlänge des Steckfühlers kann insgesamt vergleichsweise kurz ausgestaltet sein.

Durch die Positionierung der mindestens einen Auslassöffnung im Bereich des mindestens einen Druckminimums wird der Luftmassendurchsatz, insbesondere durch den Bypasskanal (der Luftmassendurchsatz durch den Hauptkanal ist weniger relevant für die Signaleigenschaften) erheblich gefördert. Durch die Positionierung des Hauptstromauslasses seitlich in einem Gebiet mit abgelöster Strömung wird die Störung der Außenströmung minimiert, wodurch die Signalreproduzierbarkeit des Steckfühlers erheblich verbessert wird. Allgemein bezeichnet man das dynamische Verhalten des Steckfühlers als Pulsationsverhalten. Bei pulsierender Luftströmung pulsiert die Luft im Bypasskanal mit, und der Bypasskanal fungiert als Ausgleich von Nichtlinearitäten der Kennlinie des Steckfühlers und der thermischen Trägheiten. Wird der mindestens eine Bypassauslass an der Seite des Steckfühlers, vorzugsweise weit stromaufwärts und in der Nähe der Einlassöffnung, positioniert, so lassen sich dadurch Pulsationsfehler vermindern, da Druckwellen im fluiden Medium dann Einlass- und Auslassöffnung annähernd gleichzeitig erreichen und somit nur zu vergleichsweise geringen Luftbewegungen im Bypasskanal führen. Der erfindungsgemäße Steckfühler weist somit den Vorteil eines guten Pulsationsverhaltens auf, so dass sich bei pulsierendem fluiden Medium (z.B. Luft) nur eine geringe Abweichung zwischen dem Mittelwert bei stationärem Betrieb und dem Mittelwert bei Pulsation (d.h. ein geringer Pulsationsfehler) ergibt.

Auch bei optimaler Positionierung der mindestens einen Auslassöffnung hat es sich jedoch gezeigt, dass noch eine erhebliche Störung der Umströmung des Steckerteils durch ausströmendes fluides Medium aus der mindestens einen Auslassöffnung stattfinden kann. Dies wirkt sich nachteilig auf den Druckabfall am Steckfühler und auf die Signaleigenschaften aus. Dementsprechend lässt sich der oben beschriebene Steckfühler in einer der beschriebenen Ausgestaltungen weiter dahingehend optimieren, dass die mindestens eine Auslassöffnung in ihrer Ausgestaltung optimiert wird. Diese Optimierung, in Kombination mit der Optimierung der Positionierung der mindestens einen Auslassöffnung, führt zu einer erheblichen Verbesserung der Signalcharakteristik und/oder einer Verminderung des Druckabfalls am Steckfühler.

So hat es sich als vorteilhaft erwiesen, wenn die mindestens eine Auslassöffnung mindestens ein Strömungsführungselement aufweist. Dieses mindestens eine Strömungsführungselement sollte derart ausgestaltet sein, dass dieses das aus der mindestens Auslassöffnung ausströmende fluide Medium in seiner Ausströmungsrichtung an die Hauptströmungsrichtung annähert, das ausströmende fluide Medium in Richtung der Hauptströmungsrichtung umlenkt, und/oder das ausströmende fluide Medium entlang der Kontur des Steckerteils (beispielsweise entlang der Kontur des Tragflächenprofils) umlenkt. Dies steht im Gegensatz zu üblichen Ausgestaltungen von Auslassöffnungen, welche eine Ausströmungsrichtung im Wesentlichen senkrecht zum jeweiligen Ort auf dem Profil des Steckerteils bewirken. Im Gegensatz dazu bewirkt das mindestens eine Strömungsführungselement, das sich das ausströmende fluide Medium optimal in den Umgebungsstrom um das Steckerteil herum einfügt, wodurch dieser Strom möglichst wenig gestört wird.

Insbesondere kann die mindestens eine Auslassöffnung quer zur Hauptströmungsrichtung (das heißt insbesondere senkrecht zur Hauptströmungsrichtung und/oder senkrecht mit ihrer flächennormalen zum jeweiligen Ort auf dem Profil des Steckerteils) angeordnet sein. Das mindestens eine Strömungsführungselement kann dann beispielsweise eine bezüglich der Hauptströmungsrichtung an der stromaufwärtigen Kante der mindestens einen Auslassöffnung angeordnete Umlenknase umfassen, welche im Wesentlichen in Hauptströmungsrichtung weist. Diese mindestens eine Umlenknase bewirkt anschaulich gesprochen, dass die Umgebungsströmung möglichst ohne zusätzliche Verwirbelungen oder Strömungsstörungen an der mindestens einen Auslassöffnung vorbeigeführt wird. Gleichzeitig kann die mindestens eine Umlenknase, wie oben beschrieben, eine Umlenkung des ausströmenden fluiden Mediums bewirken.

Alternativ oder zusätzlich kann das mindestens eine Strömungsführungselement auch, in diesem Fall vorzugsweise an der stromabwärtigen Kante der mindestens einen Auslassöffnung, eine Abrundung und/oder Abflachung aufweisen. Im Gegensatz zu einer, wie im Stand der Technik üblichen, scharfen stromabwärtigen Kante an der mindestens einen Auslassöffhung bewirkt die Abrundung und/oder Abflachung eine sanfte Umlenkung des ausströmenden fluiden Mediums in Hauptströmungsrichtung, was eine Störung zusätzlich vermindert.

Simulationsrechnungen haben dabei gezeigt, dass die Länge der Umlenknase (das heißt die maximale Länge der Umlenknase in Richtung der Hauptströmungsrichtung) einen optimalen Bereich aufweist. Dieser optimale Bereich liegt bei einer Länge zwischen 0,05 D und 0,5 D, vorzugsweise zwischen 0,1 D und 0,4 D, wobei D die Öffnungsweite (siehe oben) der mindestens einen Auslassöffnung ist. Dabei hat es sich gezeigt, dass es sich günstig auswirken kann, wenn Hauptstromauslass und Bypassauslass unterschiedlich ausgestaltet sind, wobei bevorzugt ist, dass insbesondere der Hauptstromauslass eine derartige Umlenknase aufweist.

Auch die oben beschriebene mindestens eine Abrundung und/oder Abflachung kann in ihrer Länge (wobei es sich beispielsweise um eine gerade Länge und/oder eine Bogenlänge handeln kann) in Hauptströmungsrichtung optimiert werden. So hat sich eine Länge zwischen 1,0 D und 5,0 D, vorzugsweise zwischen 2,0 D und 4,0 D, als optimal erwiesen. Wiederum wird mit D die Öffnungsweite der mindestens einen Auslassöffnung bezeichnet.

Diese Ausgestaltung der mindestens einen Auslassöffnung in einer der beschriebenen Varianten bietet den zusätzlichen Vorteil einer Maximierung des Durchsatzes an strömendem fluiden Medium, insbesondere durch den Bypasskanal. Die Außenströmung des fluiden Mediums um das Steckerteil herum wird nur minimal gestört. Insbesondere durch eine geeignete Ausgestaltung des mindestens einen Hauptstromauslasses lässt sich auch die Größe der Ablösegebiete am Steckerteil vermindern, wodurch sich stabilere Strömungsverhältnisse um den Steckfühler herum einstellen. Insgesamt wird das Signalrauschen des Messsignals des Steckfühlers erheblich verbessert, und die Reproduzierbarkeit des Messsignals wird erhöht.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1A: in einem im Ansaugtrakt einer Brennkraftmaschine eingesetzten Heißfilmluftmassenmesser;
- Figur 1B: einen geöffneten Heißfilmluftmassenmesser in Draufsicht;
- Figur 2: eine Prinzipdarstellung eines Tragflächenprofils;
- Figur 3: ein erstes Ausführungsbeispiel eines Tragflächenprofils eines erfindungsgemäßen Steckfühlers mit einer Abschrägung;
- Figur 4: eine zweites erfindungsgemäßes Ausführungsbeispiel eines Steckfühlers mit einer Abschrägung und einer Stufe;
- Figur 5: ein Druckprofil über einem dritten Ausführungsbeispiel eines erfindungsgemäßen Steckfühlers;
- Figur 6A: ein Ausführungsbeispiel der Positionierung zweier Auslassöffnungen auf der Seite eines Steckfühlers;
- Figur 6B: eine Ausgestaltung eines Bypassauslasses auf der Seite eines erfindungsgemäßen Steckfühlers;
- Figur 6C: ein Ausführungsbeispiel der Ausgestaltung eines Hauptstromauslasses eines erfindungsgemäßen Steckfühlers;
- Figur 7A: eine perspektivische Darstellung des Steckfühler gemäß Figur 6A mit skizziertem Verlauf von Hauptkanal und Bypasskanal; und
- Figur 7B: eine Darstellung des Steckfühlers gemäß Figur 7A mit geöffnetem Gehäuse.

### Ausführungsformen der Erfindung

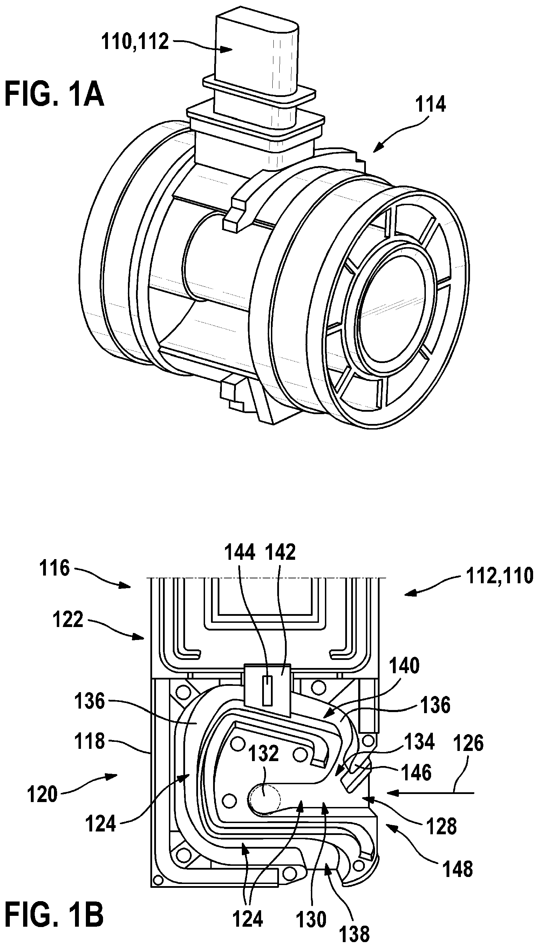

In Figur 1A ist ein dem Stand der Technik entsprechendes Ausführungsbeispiel eines Steckfühlers 110 dargestellt, welcher in diesem Fall als Heißfilmluftmassenmesser 112 ausgebildet ist. Der Heißfilmluftmassenmesser 112 ist in einen Ansaugtrakt 114 einer Brennkraftmaschine eingesetzt, welche in Figur 1A nicht dargestellt ist. Derartige Heißfilmluftmassenmesser 112 sind kommerziell erhältlich. Der Heißfilmluftmassenmesser 112 ist ausgestaltet, um die Strömungsrichtung eines Ansaugstromes zu erkennen und ist für eine Lasterfassung bei Brennkraftmaschinen mit Benzin- oder Dieselkraftstoffeinspritzung konzipiert. Der Einbau des Heißfilmluftmassenmessers 112 erfolgt üblicherweise zwischen einem Luftfilter und einer Drosselvorrichtung und erfolgt in der Regel als vormontierte Baugruppe. Dementsprechend weist der Steckfühler 110 ein Steckerteil 116 auf, welches in Figur 1B in geöffnetem Zustand in Seitenansicht dargestellt ist und welche in Figur 1A in den Ansaugtrakt 114 hineinragt. In Figur 1B ist erkennbar, dass in diesem Ausführungsbeispiel des Heißfilmluftmassenmessers 112 ein Messgehäuse 118 des Heißfilmluftmassenmessers 112 unterteilt ist in einen Strömungsbereich 120 und einen Elektronikbereich 122. Im Strömungsbereich 120 ist ein Strömungskanal 124 aufgenommen, welcher in diesem, dem Stand der Technik entsprechenden Ausführungsbeispiel ausgestaltet ist wie in DE 10 2004 022 271A1 beschrieben. Der Steckfühler 110 wird von Luft in einer Hauptströmungsrichtung 126 angeströmt. Die Luft strömt durch eine Einlassöffnung 128 in den Strömungskanal 124 ein. Der Strömungskanal 124 weist einen Hauptkanal 130 auf, welcher sich im Wesentlichen gerade, entlang der Hauptströmungsrichtung 126 von der Einlassöffnung 128 zu einem Hauptstromauslass 132 befindet. Der Hauptstromauslass 132 befindet sich hierbei seitlich in einer Wand des Steckerteils 116.

Vom Hauptkanal 130 zweigt an einer Abzweigung 134 ein Bypasskanl 136 ab, welcher sich im Wesentlichen mit gekrümmtem Verlauf um den Hauptstromauslass 132 herum bis zu einem an der Unterseite des Steckerteils 116 gelegenen Bypassauslass 138 erstreckt. In einem geraden Abschnitt 140 ragt aus dem Elektronikbereich 122 ein Chipträger 142 mit einem darin eingelassenen Sensorchip 144 in den Bypasskanal 136. Der Chipträger 142 ist üblicherweise an einer im Elektronikbereich 122 aufgenommenen, in Figur 1B nicht dargestellten Elektronikplatine befestigt (beispielsweise angespritzt), wobei die Elektronikplatine eine Auswerte- und Ansteuerschaltung des Heißfilmluftmassenmessers 112 umfassen kann.

Um Verunreinigungen wie beispielsweise flüssige Verunreinigungen (zum Beispiel Wasser, Öl) oder feste Verunreinigungen von dem Sensorchip 144 fernzuhalten, ist an der Abzweigung 134 des Bypasskanals 136 eine scharfkantige Nase 146 vorgesehen. An dieser Nase wird der Hauptstrom vom durch den Bypasskanal 136 strömenden Teil der Luft getrennt, derart, dass Wassertröpfchen und andere Verunreinigungen geradeaus weiter durch den Hauptkanal 130 strömen und im Wesentlichen nicht zum Sensorchip 144 gelangen können.

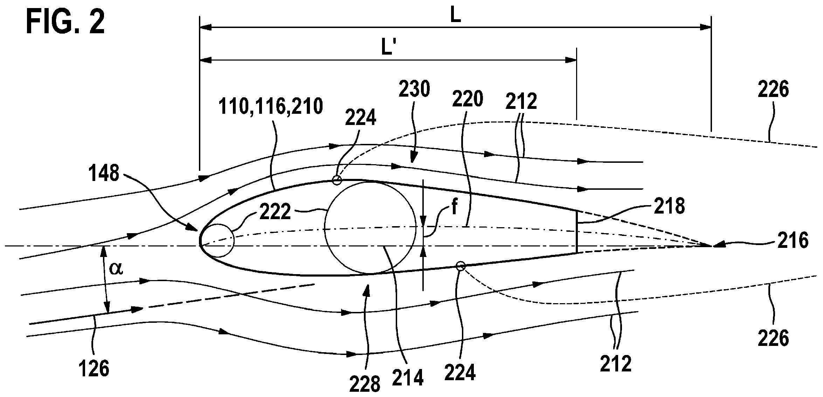

Eine Problematik des dem Stand der Technik entsprechenden Heißfilmluftmassenmessers 112 besteht in der Ausgestaltung des Steckerteils 116 mit im Wesentlichen rechteckigem Querschnitt in einer Schnittebene senkrecht zur Zeichenebene in Figur 1B. Dementsprechend weist das Steckerteil 116 eine Anströmseite 148 mit einer im Wesentlichen senkrecht zur Hauptströmungsrichtung 126 ausgestalteten Fläche auf. Eine mögliche Ausgestaltung der Erfindung besteht darin, die Anströmseite 148 als abgerundete Anströmseite auszugestalten, wobei die Abrundung bereits im Steckerteil 116 und somit im Steckfühler 110 integriert ist. Insgesamt weist das Steckerteil 116 in einer Schnittebene senkrecht zur Zeichenebene in Figur 1B, zumindest im Bereich der Einlassöffnung 128, ein Tragflächenprofil 210 auf, welches beispielhaft in Figur 2 dargestellt ist. Anhand der Prinzipdarstellung in Figur 2 sollen die grundlegenden Begriffe des Tragflächenprofils 210 erläutert werden.

Das Tragflächenprofil 210 weist erfindungsgemäß eine abgerundete Anströmseite 148 auf, welche im Wesentlichen der Hauptströmungsrichtung 126 entgegengesetzt orientiert ist, wenn das Steckerteil 116 im Ansaugtrakt 114 der Brennkraftmaschine montiert ist. Die Anströmseite 148 wird dabei bei Tragflächen häufig auch als Staupunkt bezeichnet.

Die Strömung der Luft um das Tragflächenprofil 210 herum ist in Figur 2 symbolisch durch die Stromlinien 212 dargestellt. Dabei wird deutlich, dass die Strömung um das Tragflächenprofil 210 erfindungsgemäß aus zweierlei Gründen asymmetrisch ist. Zum Einen ist die Profilmittellinie 214 auf eine gedachte Linie zwischen Scheitelpunkt der Anströmseite 148 und der fiktiven Hinterkante 216 des Tragflächenprofils gegenüber der Hauptströmungsrichtung 126 um einen Winkel α verkippt. Dadurch steigt die Strömungsgeschwindigkeit über dem Tragflächenprofil 210 an, und unter dem Tragflächenprofil 210 sinkt diese ab. Dementsprechend steigt der Druck unter dem Tragflächenprofil 210 an (Hochdruckseite 228) und sinkt über dem Tragflächenprofil 210 ab (Niederdruckseite 230). Dies bewirkt den bekannten Auftriebseffekt von Tragflächen.

Eine Besonderheit des Tragflächenprofils 210 gemäß dem Ausführungsbeispiel in Figur 2 besteht darin, dass das Tragflächenprofil 210 eher ein "abgeschnittenes" Heck 218 aufweist. Dies bedeutet, dass das Heck im Wesentlichen senkrecht zur Profilmittellinie 214 steht, bzw., bei verschwindendem Anstellwinkel a, senkrecht zur Hauptströmungsrichtung 126. Alternativ zur in Figur 2 eingezeichneten Definition der Profilmittellinie 214 ließe sich diese auch dadurch definieren, dass sich diese vom Scheitelpunkt der Anströmseite 148 zum Mittelpunkt des Hecks 218 erstreckt.

Neben der oben aufgeführten Asymmetrie der Strömung durch den Anstellwinkel α relativ zur Hauptströmungsrichtung 126 wird in dem Ausführungsbeispiel des Tragflächenprofils 210 gemäß Figur 2 eine weitere Asymmetrie dadurch herbeigeführt, dass dieses eine Profilwölbung aufweist. So ist in Figur 2 die so genannte Skelettlinie 220 eingezeichnet, welche geometrisch dadurch erhalten wird, dass dem Tragflächenprofil 210 Innenkreise 222 eingeschrieben werden. Die Gesamtheit der Mittelpunkte dieser Innenkreise 222 bildet die Skelettlinie 220. Eine Profilwölbung bedeutet, dass diese Skelettlinie 220, welche bei perfekt symmetrischem Tragflächenprofil 210 auf der Profilmittellinie 214 zu liegen käme, nunmehr von dieser Profilmittellinie 214 abweicht. Die maximale Abweichung f der Skelettlinie 220 von der Profilmittellinie 214 wird als Profilwölbung bezeichnet. Häufig wird diese auf die Gesamtlänge L (Profillänge) des Tragflächenprofils 210 bezogen und in Prozent angegeben. Dabei kann die Gesamtlänge L, wie in Figur 2 eingezeichnet, vom Scheitelpunkt der Anströmseite 148 bis zur fiktiven Hinterkante 216 gemessen werden, oder es kann (wie bei den obigen Zahlenangaben der bevorzugten Profilwölbung) ein Bezug auf die Länge L' genommen werden, welche zwischen dem Scheitpunkt der Anströmseite 148 und dem Heck 218 gemessen wird. Somit ergibt sich als Profilwölbung in Prozent das Verhältnis f/L'. Durch die Profilwölbung wird eine zusätzliche Asymmetrie herbeigeführt, welche die Verdichtungen der Stromlinien 212 oberhalb des Tragflächenprofils 210 noch verstärkt und somit den beschriebenen Effekt der Erhöhung der Geschwindigkeit in diesem Bereich.

Der Verlauf der Stromlinien 212 in Figur 2 ist idealisiert dargestellt und ist bei üblichen Tragflächenprofilen 210 in dieser Weise häufig nicht zu finden. Tatsächlich tritt in der Regel an jeweils einem oder mehreren Separationspunkten auf der Oberseite und zum Teil auch auf der Unterseite des Tragflächenprofils 210 eine Strömungsablösung auf. Dabei lösen sich in der Regel eine oder mehrere Grenzschichten 226, welche bis dahin das Tragflächenprofil 210 umgeben haben, von diesem ab und bilden eine oder mehrere Ablösungszonen. Diese Ablösepunkte 224 und die abgelösten Grenzschichten 226 (auch Ablösezonen oder Ablösebereiche genannt) sind in Figur 2 symbolisch angedeutet, wobei ebenfalls angedeutet ist, dass bei angestelltem Tragflächenprofil 210 der obere Ablösepunkt 224 in der Regel weiter anströmseitig gelegen ist als der untere Ablösepunkt 224. Anstelle eines wohldefinierten Ablösepunktes 224, welcher ohnehin keinen Punkt, sondern eine Linie senkrecht zur Zeichenebene darstellt, können unter den Ablösepunkten 224 auch Bereiche (z.B. Ablöselinien) oder Zonen mit einer endlichen Ausdehnung verstanden werden.

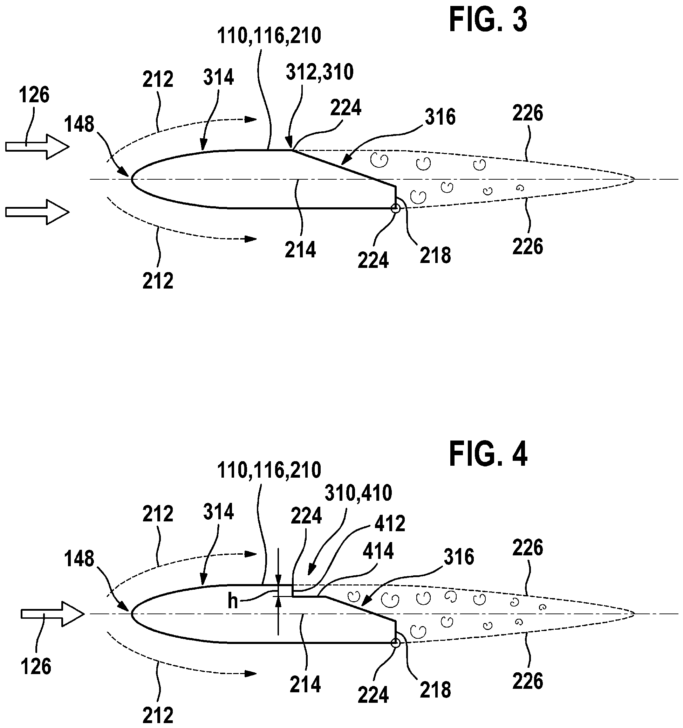

Eine Problematik, auf welche oben bereits eingegangen wurde, besteht darin, dass diese Ablösepunkte 224, an welchem sich abgelöste Grenzschichten 226 bilden, in vielen Fällen instabil sind und sogar oszillieren können. Die Lage der abgelösten Grenzschichten 226 relativ zu der Lage des Hauptstromauslasses 132 und des Bypassauslasses 138 wirkt sich jedoch empfindlich auf das Strömungsverhalten im Strömungskanal 124 und somit auf die Signaleigenschaften des Heißfilmluftmassenmessers 112 aus. Gemäß einer weiteren Idee der Erfindung lässt sich daher mindestens ein Ablöseelement 310 vorsehen, welches die Lage des Ablösepunkts 224 auf mindestens einer Seite des Tragflächenprofils 210, vorzugsweise auf der Oberseite (das heißt auf der Seite mit erhöhter Strömungsgeschwindigkeit) stabilisiert und vorzugsweise fixiert. In den Figuren 3, 4 und 5 sind verschiedene Ausführungsbeispiele derartiger Ablöseelemente 310 dargestellt.

Bei dem in Figur 3 dargestellten Ausführungsbeispiel eines Tragflächenprofils 210 ist ein Knickprofil 312 vorgesehen. Wie aus Figur 3 erkennbar, ist dieses Knickprofil 312 auf der Oberseite des Tragflächenprofils 210 ungefähr in der Mitte zwischen Anströmseite 148 und Heck 218 angeordnet, bzw. leicht hinter dieser Mitte. Das Tragflächenprofil 210 ist dabei derart ausgestaltet, dass dieses vor dem Knickprofil 312, das heißt anströmseitig, gekrümmt ist und im gekrümmten Bereich 314 mit positiver Steigung verläuft. Hinter dem Knickprofil 312, das heißt abströmseitig vom Knickprofil 312, ist das Tragflächenprofil 210 in einem Abflachungsbereich 316 abgeflacht und verläuft dort mit negativer Steigung im Wesentlichen eben zur Profilmittellinie 214 hin. Anschließend ist wiederum ein abgeschnittenes Heck 218 vorgesehen.

Diese Ausgestaltung des Tragflächenprofils 210 mit dem Ablöseelement 310 bewirkt, dass der obere Ablösepunkt 224 im Wesentlichen im Ablöseelement 310 fixiert wird. Auf der Unterseite des Tragflächenprofils 210 wird sich der Ablösepunkt 224 üblicherweise an der Ecke zum senkrechten Heck 218 einstellen. Die abgelösten Grenzschichten sind in Figur 3 wiederum mit der Bezugsziffer 226 bezeichnet und symbolisch angedeutet. Um den vorderen Teil des Tragflächenprofils 210 herum wird die Strömung auf beiden Seiten bis zu den Ablösepunkten 224 gleichmäßig beschleunigt, was zu einer sehr stabilen, unempfindlichen Strömungstopologie führt. Die entstehenden abgelösten Grenzschichten 226 sind in ihrer Ausdehnung klein, sind stationär und stören somit die Reproduzierbarkeit der Messung nicht oder nur geringfügig. Wäre das Tragflächenprofil 210 symmetrisch mit anliegender, beschleunigter Strömung auf beiden Seiten, ergäbe sich eine wesentlich größere Gesamtdicke des Steckerteils 116 und damit ein größerer Materialbedarf und ein größerer Druckabfall am Steckfühler 110.

In Figur 4 ist ein zu Figur 3 alternatives Ausführungsbeispiel eines Tragflächenprofils 210 mit einem Ablöseelement 310 dargestellt. Im Gegensatz zum Ausführungsbeispiel in Figur 3 ist hier kein Knickprofil 312 vorgesehen, sondern ein Stufenprofil 410, an welches sich wiederum, analog zu Figur 3, abströmseitig ein Abflachungsbereich 316 anschließt. Das Stufenprofil 410 ist in diesem Fall als rechteckige Stufe ausgestaltet, mit einer ersten Stufenfläche 412 senkrecht zur Profilmittellinie 214 und einer zweiten Stufenfläche 414 parallel zur Profilmittellinie 214. Die Stufenhöhe h beträgt vorteilhafterweise mindestens 0,5 mm, wobei jedoch auch andere Stufenhöhen praktikabel sind. Insbesondere werden Stufenhöhen h im Bereich zwischen 1% und 20% der gesamten Profildicke des Tragflächenprofils 210 bevorzugt. Die zweite Stufenfläche 414 hat typischerweise eine Länge zwischen 1,0 und 7,0 mm, wobei insgesamt Längen zwischen 1% und 20% der Profiltiefe bevorzugt sind. Die Strömung kann an dieser Stufe dem scharfen Knick nicht folgen und löst sich von der Oberfläche des Tragflächenprofils 210 ab. Die abgelösten Grenzschichten 226 erhalten somit nahezu stets die gleiche Größe und Form und bleiben stabil, auch wenn sich die Anströmverhältnisse ändern. Die stabile Strömungstopologie vermindert Rückwirkungen der Strömung auf das Signal des Heißfilmluftmassenmessers 112 und führt zu besserer Reproduzierbarkeit des Messsignals.

Auch andere Ausgestaltungen des Stufenprofils 410 sind denkbar. So könnte beispielsweise die erste Stufenfläche 412 unter einem von 90° abweichenden Winkel zur Profilmittellinie 214 angeordnet sein, so dass die Stufe einen leichten, zur Abströmseite geneigten Überhang aufweist, mit einer scharfen Kante (spitzer Winkel) an der Oberseite. Hierdurch kann die Fixierung des Ablösepunkts 224 weiter verbessert werden.

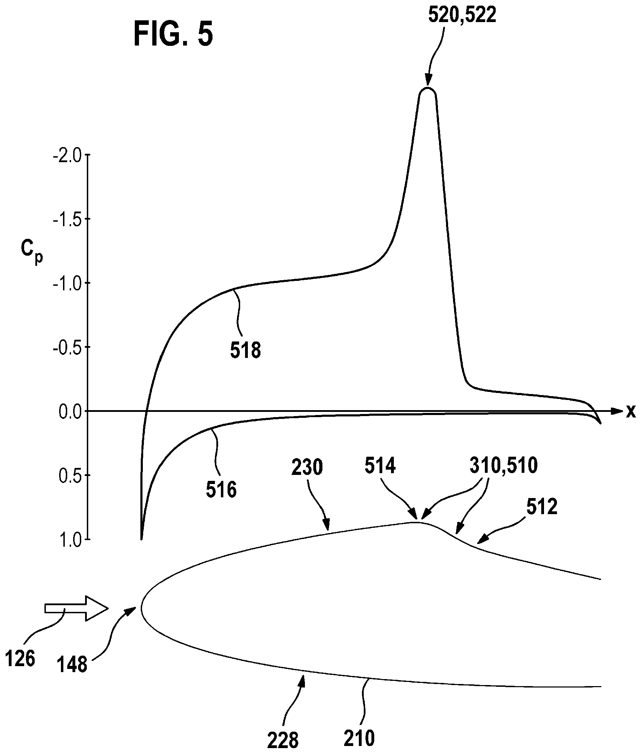

In Figur 5 ist ein weiteres Ausführungsbeispiel eines Tragflächenprofils 210 dargestellt, welches ebenfalls ein Ablöseelemente 310 aufweist. Im Gegensatz zu den Ausführungsbeispielen in den Figuren 3 und 4 weist dieses Ablöseelement 310 jedoch keine scharfen Kanten mit Unstetigkeiten in der Steigung (Knicken) auf, einen stetigen Verlauf der Steigung des Tragflächenprofils 210. Das Ablöseelement 310 gemäß Figur 5 zeigt ein Hügelprofil 510 mit einem zusätzlichen Wendepunkt 512. Auch eine andere stetige Ausgetaltung ist möglich, beispielsweise eine Ausgestaltung ohne Wendepunkt, lediglich mit einem Maximum. Das Profil gemäß Figur 5 zeigt ein Maximum 514, also ein Punkt, an welchem die Steigung des Tragflächenprofils 210 ein stetigen Wechsel von einer positiven Steigung hin zu einer negativen Steigung durchführt (von der Anström- zur Abströmseite).

Die Ablöseelemente 310 mit stetigem Verlauf der Steigung weisen gegenüber Knicken den Vorteil auf, dass geringere Störungen in der Strömung des fluiden Mediums verursacht werden. Dadurch ist der gesamte Druckabfall an dem Tragflächenprofil 210 geringer. Außerdem weisen Ablöseelemente 310 mit stetigem Verlauf der Steigung insbesondere bei kleinen Strömungsgeschwindigkeiten eine geringere Gefahr eines Wiederanlegens der abgelösten Strömungen auf.

Über dem Tragflächenprofil 210 ist in Figur 5 ein Druckprofil 516 auf der Unterseite des Tragflächenprofils 210 und ein Druckprofil 518 auf der Oberseite des Tragflächenprofils 210 aufgetragen, welches mit Simulationsrechnungen berechnet wurde. Dabei ist der so genannte Druckbeiwert cₚ aufgetragen, also das dimensionslose Verhältnis zwischen dem Druck und dem Staudruck, als Funktion der Position entlang der Profilmittellinie 214 (welche in diesen Figuren nicht dargestellt ist). Dabei ist zu beachten, dass die Achse des Druckbeiwerts cₚ hier invertiert ist, so dass nach oben hin negative Werte aufgetragen sind.

Wie sich aus den Auftragungen des Druckbeiwerts erkennen lässt, weist das Druckprofil 516 auf der Unterseite des Tragflächenprofils 210 (Hochdruckseite 228) jeweils einen gleichförmigen Verlauf auf, während das Druckprofil 518 auf der Oberseite des Tragflächenprofils 210 (Niederdruckseite 230) jeweils eine Abnormalität 520 aufweist. Diese Abnormalität 520 ist als Minimum 522 im Druck ausgestaltet. Entsprechend tritt in diesem Bereich der Abnormalität 520 ein Maximum in der Strömungsgeschwindigkeit der Luft auf. Es hat sich gezeigt, dass diese Abnormalität 520, welche durch die beschriebene Kontur des Tragflächenprofils 210 mit dem Ablöseelement 310 räumlich am Tragflächenprofil 210 festgelegt ist, gut geeignet ist, um den Ablösepunkt 224 auf der Oberseite des Tragflächenprofils 210 zu fixieren, so dass die Strömungsablösung definiert und ohne größere Schwankungen im Betrieb erfolgt.

Ein weiterer positiver Nebeneffekt des in Figur 5 dargestellten Beispiels eines Tragflächenprofils 210 liegt darin, dass, wie das Druckprofil 516 auf der Unterseite zeigt, eine stärkere Beschleunigung der Strömung auf dieser Unterseite des Tragflächenprofils 210 auftritt. Damit werden in der Regel alle Tendenzen der Strömung, sich in diesem Bereich abzulösen, zuverlässig unterbunden.

Es sei noch darauf hingewiesen, dass der im folgenden ausgeführte erfindungsgemäße Gedanke der Positionierung der Auslassöffnungen 132, 138 nicht notwendigerweise an die Verwendung eines Ablöseelements 310 gebunden ist. So können auch Tragflächenprofile 210 eingesetzt werden, welche keine derartigen Ablöseelemente 310 einsetzen, welche jedoch ebenfalls ein Minimum 522 im Druckverlauf aufweisen. Derartige Tragflächenprofile 210 lassen sich durch Simulationsrechnungen leicht erstellen und berechnen.

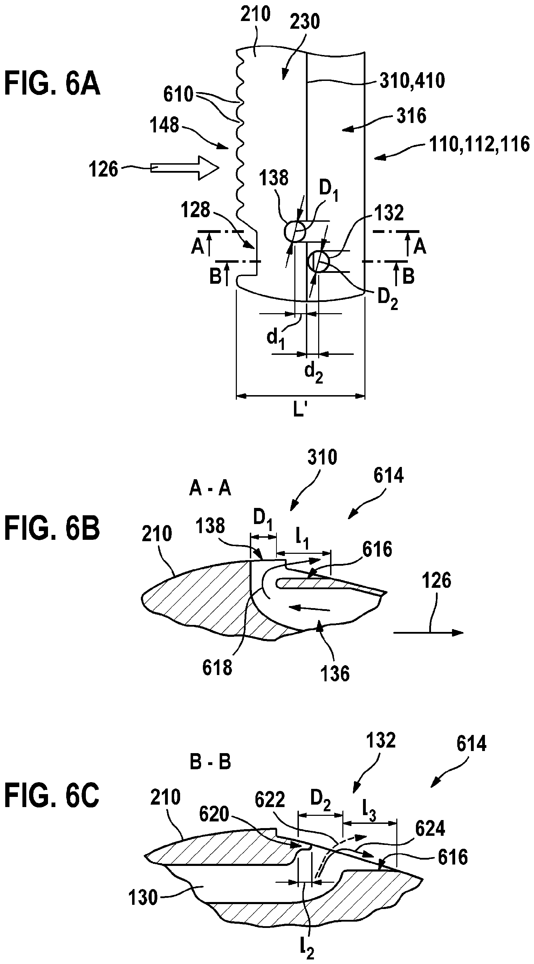

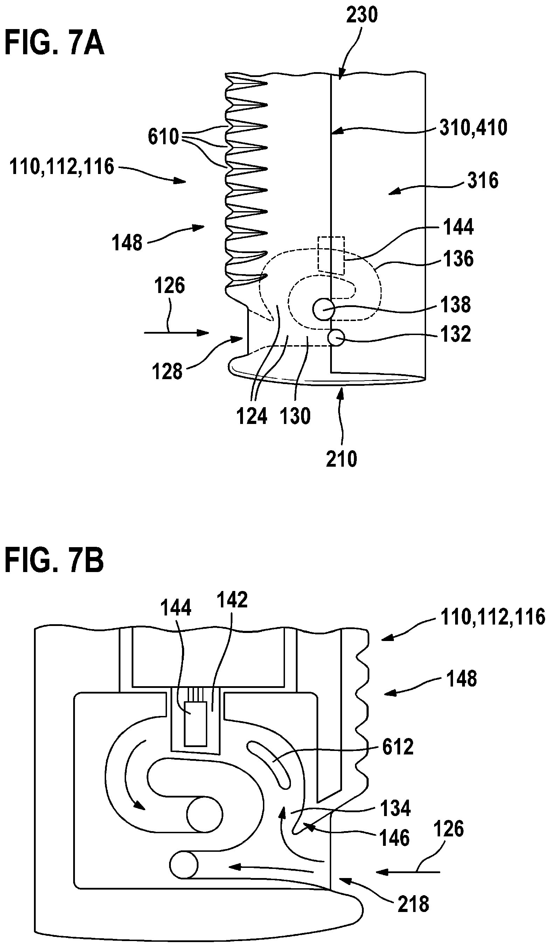

In den Figuren 6A bis 6C und 7A bis 7B ist ein Ausführungsbeispiel eines Steckfühlers 110 in Form eines Heißfilmluftmassenmessers 112 dargestellt, welches gleichzeitig beide der oben beschriebenen Grundideen der Erfindung verwirklicht. Dabei sind in den Figuren 6A bis 6C Prinzipdarstellungen gezeigt, wohingegen in den Figuren 7A und 7B perspektivische Darstellung des Heißfilmluftmassenmessers gezeigt sind. Der Aufbau des Heißfilmluftmassenmessers 112 wird daher im Folgenden in Zusammenschau dieser Figuren beschrieben.

Das in das mit der Hauptströmungsrichtung 126 strömende fluide Medium hineinragende Steckerteil 116 des Steckfühlers 110 weist in diesem Ausführungsbeispiel ein Tragflächenprofil 210 gemäß dem Beispiel in Figur 4 auf, so dass ungefähr bei 50 bis 60 % der Profillänge L' (gemessen von der Anströmseite 146) ein Ablöseelement 310 in Form eines Stufenprofils 410 angeordnet ist, an welchem im umgebenden strömenden fluiden Medium ein Drucksprung (Druckminimum) auftritt. An das Ablöseelement 310 schließt sich abströmseitig ein Abflachungsbereich 316 an, analog zur Ausgestaltung in Figur 4. Zusätzlich an der abgerundeten Anströmseite 148 des Steckerteils Strömungsrillen 610 angeordnet, welche Längswirbel erzeugen sollen.

Im Gegensatz zum dem Stand der Technik entsprechenden Ausführungsbeispiel gemäß Figur 1B sind in dem Ausführungsbeispiel gemäß den Figuren 6A und 7A zwei Auslassöffnungen auf der in diesen Darstellungen obenliegenden Niederdruckseite 230 im Bereich des Ablöseelements 310 angeordnet: Der Hauptstromauslass 132 und der Bypassauslass 138. Dabei ist der Verlauf des Strömungskanals 124, bei welchem wiederum ein Bypasskanal 136 von einem Hauptkanal 130 abzweigt, gestrichelt in der perspektivischen Darstellung in Figur 7A gezeigt. Für die Funktion dieser Kanäle 130, 136 sowie des Sensorchips 144 sei auch die Beschreibung zu Figur 1B verwiesen.

Wie insbesondere in der Darstellung gemäß Figur 6A zu erkennen ist, sind die Auslassöffnungen 132, 138 in diesem Ausführungsbeispiel als näherungsweise runde Öffnungen mit Durchmessern D₁ (Bypassauslass 138) bzw. D₂ (Hauptstromauslass 132) ausgestaltet. Dabei liegt der Durchmesser D₂ des Hauptstromauslasses 132 in diesem Ausführungsbeispiel bei ca. 10 % der Profillänge L, wohingegen der Durchmesser D₁ des Bypassauslass 138 geringfügig größer gewählt wurde, in diesem Beispiel bei ca. 15 % der Profillänge L'. Die Darstellungen in den Figuren 6A und 7A sind diesbezüglich nicht maßstabsgerecht. Die Darstellung gemäß Figur 7B zeigt nochmals den Verlauf des Strömungskanals 124 bzw. dessen Aufteilung in Hauptkanal 130 und Bypasskanal 136, bei geöffnetem Steckerteil 116, in Blickrichtung von der Hochdruckseite 228 (also in umgekehrter Blickrichtung zu der Blickrichtung in Figur 6A und 7A). Dabei ist zu erkennen, dass im Bypasskanal 136, unmittelbar hinter der Abzweigung 134 vom Hauptkanal 130, eine Leitschaufel 612 vorgesehen ist, welche dem gekrümmten Verlauf des Bypasskanals 136 in diesem Bereich angepasst ist und welche eine Beruhigung der Strömung im Bypasskanal 136 bewirken soll.

In der Darstellung gemäß Figur 6A lässt sich die erfindungsgemäße Positionierung der Auslassöffhungen 132, 138 erkennen. So ist in diesem Ausführungsbeispiel der Bypassauslass 138 in einem Abstand d₁ vor dem Ablöseelement 310, an welchem das Druckminimum auftritt, angeordnet, welcher ungefähr der Hälfte der Öffnungsweite D₁ (in diesem Fall Durchmesser) des Bypassauslasses 138 entspricht. Analog ist auch der Hauptstromauslass 132 mit seinem Zentrum um einen Abstand d₂ von dem Ablöseelement 310 beabstandet, im Gegensatz zum Bypassauslass 138 jedoch auf der Abströmseite des Ablöseelements 310. Diese Anordnung des Bypassauslasses 138 stromaufwärts des Ablöseelements 310 bewirkt einerseits, dass der Bypassauslass 138 noch in der Nähe des Druckminimums (vergleiche Bezugsziffer 522 in Figur 5) angeordnet ist, so dass optimal die Saugwirkung des Druckminimums ausgenutzt wird, um den Durchsatz durch den Bypasskanal 136 zu maximieren. Gleichzeitig ist der Bypassauslass jedoch stromaufwärts (entgegen der Hauptströmungsrichtung 126) in der Nähe der Einlassöffnung 128 angeordnet, um den Pulsationsfehler zu minimieren. Die gezeigte Beabstandung stellt einen guten Kompromiss zwischen den beiden genannten Effekten dar.

Gleichzeitig bewirkt die Positionierung des Hauptstromauslasses 132 stromabwärts des Ablöseelements 310, jedoch nach wie vor in der Nähe dieses Stromablöseelements 310, einerseits einen guten Durchsatz (welcher in der Regel weniger wichtig ist als der Durchsatz durch den Bypasskanal 136) und dabei einen Auslass des Hauptstroms in ein Gebiet mit einer abgelösten Grenzschicht 226 (vergleiche Figur 4). Diese Positionierung bewirkt daher, dass der aus dem Hauptstromauslass 132 austretende Hauptstrom die Außenströmung um das Steckerteil 116 herum geringstmöglich stört, so dass die Reproduzierbarkeit der Messung optimiert wird.

Neben der Optimierung der Lage der Auslassöffnungen 132, 138 lässt sich, wie oben beschrieben, zusätzlich auch die Gestalt der Auslassöffnungen 138, 132 optimieren. Dies ist in den Figuren 6B und 6C dargestellt, wobei Figur 6B eine Schnittdarstellung (Detailansicht) entlang der Linie A-A durch den Bypassauslass 138 in Figur 6A zeigt und Figur 6C eine Schnittdarstellung (ebenfalls Detailansicht) entlang der Schnittlinie B-B durch den Hauptstromauslass 132 in Figur 6A. Dabei ist zu erkennen, dass bei beiden Auslassöffnungen 132, 138 Strömungsführungselemente 614 vorgesehen sind. Dabei weist das Strömungsführungselement 614 im Fall des Bypassauslasses 132 eine sich stromabwärts an den Bypassauslass 132 anschließende Abflachung 616 im Tragflächenprofil 210 auf, welche näherungsweise parallel zur Hauptströmungsrichtung 126 verläuft. Diese Abflachung 616 hat eine Länge l₁, welche typischerweise im Bereich zwischen dem Doppelten und dem Vierfachen der Öffnungsweite D₁ des Bypassauslasses 138 liegt. Diese Abflachung 616 bewirkt, dass der Bypassauslassstrom, welcher in Figur 6B mit 618 bezeichnet ist, sich ohne größere Störung in die Außenströmung einfügt und dass ein maximaler Durchsatz durch den Bypasskanal 136 erzielt wird.

Für den Hauptstromauslass 132 hat sich hingegen ein Strömungsführungselement 614 bewährt, welches neben einer abströmseitigen Abflachung 616 eine Umlenknase 620 umfasst. Während die Abflachung 616 (welche im vorliegenden Ausführungsbeispiel leicht abgerundet ist) eine Länge l₃ hat, welche im selben Bereich wie die Länge l₁ gemäß Figur 6B liegen kann, weist die Umlenknase 620, welche in den Hauptstromauslass 132 hineinragt, eine Länge l₂ auf, welche typischerweise zwischen dem 0,1-fachen und dem 0,4-fachen der Öffnungsweite D₂ des Hauptstromauslasses 132 liegt. Beispielsweise kann diese Umlenknase 620 durch eine einfaches Abkleben der stromaufwärtigen Kante des Hauptstromauslasses 132 mit einem in den Hauptstromauslass 132 hineinragenden Klebestreifen realisieren. Diese Umlenknase 620 bewirkt, dass der Hauptauslassstrom hin zur Kontur des Tragflächenprofils 210 umgelenkt wird und somit geringere Störungen in der umgebenden Strömung verursacht. Dabei ist in Figur 6C der Hauptauslassstrom ohne Umlenknase 620 symbolisch durch den gestrichelten Pfeil 622 dargestellt, wohingegen der Hauptauslassstrom bei Verwendung der Umlenknase 620 durch den durchgezogenen Pfeil 624 dargestellt ist.

## Patentansprüche

1. Steckfühler (110) zur Bestimmung wenigstens eines Parameters eines in einer Hauptströmungsrichtung (126) durch ein Strömungsrohr strömenden fluiden Mediums, insbesondere einer strömenden Ansaugluftmasse einer Brennkraftmaschine, mit einem Steckerteil (116), das in das Strömungsrohr in einer Einsteckrichtung mit vorgegebener Ausrichtung zur Hauptströmungsrichtung (126) einsteckbar ist, wobei in dem Steckerteil (116) mindestens ein Strömungskanal (124) mit mindestens einer Einlassöffnung (128) und mindestens einer Auslassöffnung (132, 138) vorhanden ist, wobei in dem mindestens einen Strömungskanal (124) mindestens ein Sensor (144) zur Bestimmung des mindestens einen Parameters aufgenommen ist, wobei das Steckerteil (116) ein Profil aufweist, an welchem sich im strömenden fluiden Medium zumindest ein mindestens lokales Druckminimum (522) einstellt, wobei die mindestens eine Auslassöffnung (132, 138) auf der Seite des Steckerteils (116) im Bereich des mindestens einen Druckminimums (522) angeordnet ist, **dadurch gekennzeichnet, dass** das Steckerteil (116) zumindest im Bereich der Einlassöffnung ein Tragflächenprofil (210) aufweist, welches sich in einer Ebene senkrecht zur Einsteckrichtung des Steckerteils (116) erstreckt, eine abgerundete Anströmseite aufweist und derart ausgestaltet ist, dass sich bei dem in das strömende fluide Medium eingebrachten Steckerteil (116) ein asymmetrisches Strömungsprofil des fluiden Mediums mit einer Hochdruckseite (228) und einer Niederdruckseite (230) einstellt, wobei die mindestens eine Auslassöffnung (132, 138) auf der Niederdruckseite (230) angeordnet ist.

2. Steckfühler (110) gemäß dem vorhergehenden Anspruch, **gekennzeichnet durch** mindestens eine der folgenden Ausgestaltungen des Tragflächenprofils (210):
- das Tragflächenprofil (210) weist bei in das strömende fluide Medium eingebrachtem Steckerteil (116) einen Anstellwinkel α zur Hauptströmungsrichtung (126) zwischen 0° und 7°, vorzugsweise zwischen 2° und 5° und besonders bevorzugt bei 4°, auf;
- das Tragflächenprofil (210) weist eine Profilwölbung zwischen 0% und 10%, vorzugsweise zwischen 2% und 7% und besonders bevorzugt bei 5% auf.

3. Steckfühler (110) gemäß einem der vorhergehenden Ansprüche, **dadurch gekennzeichnet, dass** die mindestens eine Auslassöffnung (132, 138) eine Öffnungsweite D aufweist, wobei das Zentrum der mindestens einen Auslassöffnung (132, 138) um nicht mehr als zwei Öffnungsweiten, vorzugsweise um nicht mehr als eine Öffnungsweite, von dem Punkt des mindestens einen Druckminimums entfernt angeordnet ist.

4. Steckfühler (110) gemäß dem vorhergehenden Anspruch, wobei der mindestens eine Strömungskanal (124) mindestens einen Hauptkanal (130) und mindestens einen Bypasskanal (136) aufweist, wobei die mindestens eine Auslassöffnung (132, 138) mindestens einen Hauptstromauslass (132) des mindestens einen Hauptkanals (130) und/oder mindestens einen Bypassauslass (138) des mindestens einen Bypasskanals (136) umfasst und wobei die mindestens eine Auslassöffnung (132, 138) seitlich auf dem mindestens einen Tragflächenprofil (210) angeordnet ist, **dadurch gekennzeichnet, dass** der Steckfühler (110) mindestens eine der folgenden Anordnungen der mindestens einen Auslassöffnung (132, 138) aufweist:
- das Zentrum des mindestens einen Bypassauslasses (138) ist in einem Abstand d1 zwischen -0,5 D1 und 2,0 D1, vorzugsweise zwischen 0 D1 und 1,0 D1 und besonders bevorzugt bei 0,5 D1 stromaufwärts des mindestens einen Druckminimums (522) angeordnet, wobei D1 die Öffnungsweite des mindestens einen Bypassauslasses (138) bezeichnet;
- das Zentrum des mindestens einen Hauptstromauslasses (132) ist in einem Abstand d2 zwischen 0 D2 und 2,0 D2, vorzugsweise zwischen 0,5 D2 und 1,5 D2 und besonders bevorzugt bei 1,0 D2 stromabwärts des mindestens einen Druckminimums (522) angeordnet, wobei D2 die Öffnungsweite des mindestens einen Hauptstromauslasses (132) bezeichnet.

5. Steckfühler (110) gemäß dem vorhergehenden Anspruch, **dadurch gekennzeichnet, dass** mindestens ein Hauptstromauslass (132) in einem Bereich einer abgelösten Grenzschicht (226) der Strömung des fluiden Mediums angeordnet ist.

6. Steckfühler (110) gemäß einem der vorhergehenden Ansprüche, **dadurch gekennzeichnet, dass** das Steckerteil (116) auf mindestens einer Seite, vorzugsweise nur auf der Niederdruckseite (230), mindestens ein Ablöseelement (310) aufweist, wobei das mindestens eine Ablöseelement (310) ausgestaltet ist, um bei in das strömende fluide Medium eingebrachtem Steckerteil (116) das zumindest lokales Druckminimum (522) im strömenden fluiden Medium zu bewirken und wobei das mindestens eine Ablöseelement (310) vorzugsweise eines der folgenden Elemente umfasst: einen Knick (312) in der Kontur des Steckerteils (116), eine Stufe (410) in der Kontur des Steckerteils (116), ein Maximum (514) in der Kontur des Steckerteils (116), einen Wendepunkt (512) in der Kontur des Steckerteils (116).

7. Steckfühler (110) gemäß einem der vorhergehenden Ansprüche, **dadurch gekennzeichnet, dass** die mindestens eine Auslassöffnung (132, 138) mindestens ein Strömungsführungselement (614) aufweist, wobei das mindestens eine Strömungsführungselement (614) ausgestaltet ist, um aus der mindestens einen Auslassöffnung (132, 138) ausströmendes fluides Medium in seiner Ausströmungsrichtung an die Hauptströmungsrichtung (126) anzunähern und/oder in Hauptströmungsrichtung umzulenken und/oder entlang der Kontur des Steckerteils (116) umzulenken.

8. Steckfühler (110) gemäß dem vorhergehenden Anspruch, **dadurch gekennzeichnet, dass** die mindestens eine Auslassöffnung (132, 138) quer zur Hauptströmungsrichtung (126) angeordnet ist und dass das mindestens eine Strömungsführungselement (614) mindestens eines der folgenden Elemente umfasst:
- eine bezüglich der Hauptströmungsrichtung (126) an der stromaufwärtigen Kante der mindestens einen Auslassöffnung (132, 138) angeordnete Umlenknase (620), wobei die Umlenknase (620) im Wesentlichen in Hauptströmungsrichtung (126) weist;
- eine Abrundung und/oder Abflachung (616) der bezüglich der Hauptströmungsrichtung (126) stromabwärtigen Kante der mindestens einen Auslassöffnung (132, 138).

9. Steckfühler (110) gemäß dem vorhergehenden Anspruch, **dadurch gekennzeichnet, dass** eine Umlenknase (620) vorgesehen ist, welche eine maximale Länge l2 in Hauptströmungsrichtung (126) zwischen 0,05 D und 0,5 D, vorzugsweise zwischen 0,1 D und 0,4 D aufweist, wobei D die Öffnungsweite der mindestens einen Auslassöffnung (132, 138) ist und wobei die mindestens eine Auslassöffnung (132, 138) vorzugsweise ein Hauptstromauslass (132) ist.

10. Steckfühler (110) gemäß einem der beiden vorhergehenden Ansprüche, **dadurch gekennzeichnet, dass** eine Abrundung und/oder Abflachung (616) vorgesehen ist, welche eine Länge l3 in Hauptströmungsrichtung (126) zwischen 1,0 D und 5,0 D, vorzugsweise zwischen 2,0 D und 4,0 D aufweist, wobei D die Öffnungsweite der mindestens einen Auslassöffnung (132, 138) ist.

11. Steckfühler (110) gemäß einem der beiden vorhergehenden Ansprüche, **dadurch gekennzeichnet, dass** das Profil des Steckerteils (116) eine Profillänge L' aufweist, wobei der Durchmesser D der mindestens einen Auslassöffnung (132, 138) zwischen 10% und 20% der Profillänge L' beträgt.

## Claims

1. Plug sensor (110) for determining at least one parameter of a fluid medium, in particular of a flowing intake air mass of an internal combustion engine, flowing through a flow pipe in a main flow direction (126), having a plug part (116) which is able to be plugged into the flow pipe in a plug-in direction with a predefined orientation with respect to the main flow direction (126), wherein at least one flow channel (124) with at least one inlet opening (128) and with at least one outlet opening (132, 138) is present in the plug part (116), wherein at least one sensor (144) for determining the at least one parameter is accommodated in the at least one flow channel (124), wherein the plug part (116) has a profile on which at least one at least local pressure minimum (522) is established in the flowing fluid medium, wherein the at least one outlet opening (132, 138) is arranged on the side of the plug part (116) in the region of the at least one pressure minimum (522), **characterized in that** the plug part (116) has, at least in the region of the inlet opening, a aerofoil-type profile (210) which extends in a plane perpendicular to the plug-in direction of the plug part (116), which has a rounded incident-flow side and which is designed such that, with the plug part (116) inserted into the flowing fluid medium, an asymmetric flow profile of the fluid medium with a high-pressure side (228) and a low-pressure side (230) is established, wherein the at least one outlet opening (132, 138) is arranged on the low-pressure side (230).

2. Plug sensor (110) according to the preceding claim, **characterized by** at least one of the following designs of the aerofoil-type profile (210):
- the aerofoil-type profile (210) has, with the plug part (116) inserted into the flowing fluid medium, an incidence angle α to the main flow direction (126) of between 0° and 7°, preferably of between 2° and 5°, and particularly preferably of 4°;
- the aerofoil-type profile (210) has a profile curvature of between 0% and 10%, preferably of between 2% and 7%, and particularly preferably of 5%.

3. Plug sensor (110) according to either of the preceding claims, **characterized in that** the at least one outlet opening (132, 138) has an opening width D, wherein the centre of the at least one outlet opening (132, 138) is arranged spaced apart from the point of the at least one pressure minimum by no more than two opening widths, preferably by no more than one opening width.

4. Plug sensor (110) according to the preceding claim, wherein the at least one flow channel (124) has at least one main channel (130) and at least one bypass channel (136), wherein the at least one outlet opening (132, 138) comprises at least one main flow outlet (132) of the at least one main channel (130) and/or at least one bypass outlet (138) of the at least one bypass channel (136), and wherein the at least one outlet opening (132, 138) is arranged laterally on the at least one aerofoil-type profile (210), **characterized in that** the plug sensor (110) has at least one of the following arrangements of the at least one outlet opening (132, 138):
- the centre of the at least one bypass outlet (138) is arranged upstream of the at least one pressure minimum (522) with a separation d1 of between -0.5 D1 and 2.0 D1, preferably of between 0 D1 and 1.0 D1, and particularly preferably of 0.5 D1, wherein D1 denotes the opening width of the at least one bypass outlet (138) ;
- the centre of the at least one main flow outlet (132) is arranged downstream of the at least one pressure minimum (522) with a separation d2 of between 0 D2 and 2.0 D2, preferably of between 0.5 D2 and 1.5 D2, and particularly preferably of 1.0 D2, wherein D2 denotes the opening width of the at least one main flow outlet (132).

5. Plug sensor (110) according to the preceding claim, **characterized in that** at least one main flow outlet (132) is arranged in a region of a detached boundary layer (226) of the flow of the fluid medium.

6. Plug sensor (110) according to one of the preceding claims, **characterized in that** the plug part (116) has at least one detachment element (310) on at least one side, preferably on the low-pressure side (230) only, wherein the at least one detachment element (310) is designed to bring about the at least local pressure minimum (522) in the flowing fluid medium with the plug part (116) inserted into the flowing fluid medium, and wherein the at least one detachment element (310) preferably comprises one of the following elements: a bend (312) in the contour of the plug part (116), a step (410) in the contour of the plug part (116), a maximum (514) in the contour of the plug part (116), a point of inflection (512) in the contour of the plug part (116).

7. Plug sensor (110) according to one of the preceding claims, **characterized in that** the at least one outlet opening (132, 138) has at least one flow-guiding element (614), wherein the at least one flow-guiding element (614) is designed to draw fluid medium, flowing out of the at least one outlet opening (132, 138), towards the main flow direction (126) in its outflow direction and/or to divert said medium into the main flow direction and/or to divert said medium along the contour of the plug part (116).

8. Plug sensor (110) according to the preceding claim, **characterized in that** the at least one outlet opening (132, 138) is arranged transversely with respect to the main flow direction (126), and **in that** the at least one flow-guiding element (614) comprises at least one of the following elements:
- a diverter nose (620) which is arranged on the upstream edge, with respect to the main flow direction (126), of the at least one outlet opening (132, 138), wherein the diverter nose (620) points substantially in the main flow direction (126);
- a rounded portion and/or a flattened portion (616) of the edge of the at least one outlet opening (132, 138) which is downstream with respect to the main flow direction (126).

9. Plug sensor (110) according to the preceding claim, **characterized in that** a diverter nose (620) is provided, which has a maximum length 12 in the main flow direction (126) of between 0.05 D and 0.5 D, preferably of between 0.1 D and 0.4 D, wherein D is the opening width of the at least one outlet opening (132, 138), and wherein the at least one outlet opening (132, 138) is preferably a main flow outlet (132).

10. Plug sensor (110) according to one of the two preceding claims, **characterized in that** a rounded portion and/or a flattened portion (616) is provided, which has a length 13 in the main flow direction (126) of between 1.0 D and 5.0 D, preferably of between 2.0 D and 4.0 D, wherein D is the opening width of the at least one outlet opening (132, 138).

11. Plug sensor (110) according to one of the two preceding claims, **characterized in that** the profile of the plug part (116) has a profile length L', wherein the diameter D of the at least one outlet opening (132, 138) is between 10% and 20% of the profile length L'.

## Revendications

1. Sonde à insertion (110) destinée à déterminer au moins un paramètre d'un milieu fluide en écoulement dans une direction d'écoulement principale (126) à travers un tube d'écoulement, notamment une masse d'air d'aspiration en écoulement d'un moteur à combustion interne, comprenant une partie fiche (116) qui peut être insérée dans le tube d'écoulement dans un sens d'insertion avec une orientation prédéfinie par rapport à la direction d'écoulement principale (126), au moins un canal d'écoulement (124) comportant au moins une ouverture d'entrée (128) et au moins une ouverture de sortie (132, 138) étant présent dans la partie fiche (116), au moins un capteur (144) servant à déterminer l'au moins un paramètre étant accueilli dans l'au moins un canal d'écoulement (124), la partie fiche (116) possédant un profil au niveau duquel s'établit un minimum de pression (522) au moins local dans le milieu fluide en écoulement, l'au moins une ouverture de sortie (132, 138) étant disposée sur le côté de la partie fiche (116) dans la zone de l'au moins un minimum de pression (522), **caractérisée en ce que** la partie fiche (116) possède, au moins dans la zone de l'ouverture d'entrée, un profil de surface porteuse (210) qui s'étend dans un plan perpendiculaire au sens d'insertion de la partie fiche (116), possède un côté d'attaque arrondi et est configuré de telle sorte qu'avec la partie fiche (116) introduite dans le milieu fluide en écoulement, il s'établit un profil d'écoulement asymétrique du milieu fluide avec un côté haute pression (228) et un côté basse pression (230), l'au moins une ouverture de sortie (132, 138) étant disposée du côté basse pression (230).

2. Sonde à insertion (110) selon la revendication précédente, **caractérisée par** au moins l'une des configurations suivantes du profil de surface porteuse (210) :
- le profil de surface porteuse (210), avec la partie fiche (116) introduite dans le milieu fluide en écoulement, possède un angle d'incidence α par rapport à la direction d'écoulement principale (126) compris entre 0° et 7°, de préférence entre 2° et 5° et notamment de préférence de 4° ;
- le profil de surface porteuse (210) possède une cambrure de profil comprise entre 0 % et 10 %, de préférence entre 2 % et 7 % et notamment de préférence de 5 %.

3. Sonde à insertion (110) selon l'une des revendications précédentes, **caractérisée en ce que** l'au moins une ouverture de sortie (132, 138) possède une largeur d'ouverture D, le centre de l'au moins une ouverture de sortie (132, 138) n'étant pas espacé du point de l'au moins un minimum de pression de plus de deux largeurs d'ouverture, de préférence pas de plus d'une largeur d'ouverture.

4. Sonde à insertion (110) selon la revendication précédente, l'au moins un canal d'écoulement (124) possédant au moins un canal principal (130) et au moins un canal de dérivation (136), l'au moins une ouverture de sortie (132, 138) comportant au moins une sortie de flux principal (132) de l'au moins un canal principal (130) et/ou au moins une sortie de dérivation (138) de l'au moins un canal de dérivation (136) et l'au moins une ouverture de sortie (132, 138) étant disposée latéralement sur l'au moins un profil de surface porteuse (210), **caractérisée en ce que** la sonde à insertion (110) possède au moins l'un des arrangements suivants de l'au moins une ouverture de sortie (132, 138) :
- le centre de l'au moins une sortie de dérivation (138) est disposé à un écart d1 compris entre -0,5 D1 et 2,0 D1, de préférence entre 0 D1 et 1,0 D1 et notamment de préférence à 0,5 D1 en amont de l'au moins un minimum de pression (522), D1 désignant la largeur d'ouverture de l'au moins une sortie de dérivation (138) ;
- le centre de l'au moins une sortie de flux principal (132) est disposé à un écart d2 compris entre 0 D2 et 2,0 D2, de préférence entre 0,5 D2 et 1,5 D2 et notamment de préférence à 1,0 D2 en aval de l'au moins un minimum de pression (522), D2 désignant la largeur d'ouverture de l'au moins une sortie de flux principal (132) .

5. Sonde à insertion (110) selon l'une des revendications précédentes, **caractérisée en ce qu'**au moins une sortie de flux principal (132) est disposée dans une zone d'une couche limite (226) séparée de l'écoulement du milieu fluide.

6. Sonde à insertion (110) selon l'une des revendications précédentes, **caractérisée en ce que** la partie fiche (116) possède sur au moins un côté, de préférence seulement sur le côté basse pression (230), au moins un élément de séparation (310), l'au moins un élément de séparation (310) étant configuré pour produire le minimum de pression (522) au moins local dans le milieu fluide en écoulement lorsque la partie fiche (116) est introduite dans le milieu fluide en écoulement et l'au moins un élément de séparation (310) comportant de préférence l'un des éléments suivants : un coude (312) dans le contour de la partie fiche (116), un palier (410) dans le contour de la partie fiche (116), un maximum (514) dans le contour de la partie fiche (116), un point de retournement (512) dans le contour de la partie fiche (116).

7. Sonde à insertion (110) selon l'une des revendications précédentes, **caractérisée en ce que** l'au moins une ouverture de sortie (132, 138) possède au moins un élément de guidage de l'écoulement (614), l'au moins un élément de guidage de l'écoulement (614) étant configuré pour rapprocher la direction d'écoulement de sortie du milieu fluide qui s'écoule hors de l'au moins une ouverture de sortie (132, 138) de la direction d'écoulement principale (126) et/ou la dévier dans la direction d'écoulement principale et/ou la dévier le long du contour de la partie fiche (116).

8. Sonde à insertion (110) selon la revendication précédente, **caractérisée en ce que** l'au moins une ouverture de sortie (132, 138) est disposée transversalement par rapport à la direction d'écoulement principale (126) et **en ce que** l'au moins un élément de guidage de l'écoulement (614) comporte au moins l'un des éléments suivants :
- un mentonnet de renvoi (620) disposé au niveau du bord de l'au moins une ouverture de sortie (132, 138) en amont par rapport à la direction d'écoulement principale (126), le mentonnet de renvoi (620) étant orienté sensiblement dans la direction d'écoulement principale (126) ;
- un arrondi et/ou un méplat (616) du bord de l'au moins une ouverture de sortie (132, 138) en aval par rapport à la direction d'écoulement principale (126).

9. Sonde à insertion (1.10) selon ,l'une des revendications précédentes, **caractérisée en ce qu'**un mentonnet de renvoi (620) est présent, lequel possède une longueur maximale I2 dans la direction d'écoulement principale (126) comprise entre 0,05 D et 0,5 D, de préférence entre 0,1 D et 0,4 D, D étant la largeur d'ouverture de l'au moins une ouverture de sortie (132, 138) et l'au moins une ouverture de sortie (132, 138) étant de préférence une sortie de flux principal (132).

10. Sonde à insertion (110) selon l'une des deux revendications précédentes, **caractérisée en ce qu'**un arrondi et/ou un méplat (616) est présent, lequel possède une longueur I3 dans la direction d'écoulement principale (126) comprise entre 1,0 D et 5,0 D, de préférence entre 2,0 D et 4,0 D, D étant la largeur d'ouverture de l'au moins une ouverture de sortie (132, 138).

11. Sonde à insertion (110) selon l'une des deux revendications précédentes, **caractérisée en ce que** le profil de la partie fiche (116) possède une longueur de profil L', le diamètre D de l'au moins une ouverture de sortie (132, 138) étant compris entre 10 % et 20 % de la longueur de profil L'.
